# FASCICULE DE BREVET EUROPEEN

(11) **EP 1 879 815 B1**
(45) Date de publication et mention de la délivrance du brevet: **02.09.2009**
(21) Numéro de dépôt: 06764605.9
(22) Date de dépôt: 12.05.2006
(51) Int. Cl.: B65G 17/08, B65G 21/22

(54) **CONVOYEUR A TAPIS SANS FIN MODULAIRE**
MODULARES ENDLOSFÖRDERBAND
MODULAR ENDLESS CONVEYOR BELT

(30) Priorité: 13.05.2005 FR 0504824
(43) Date de publication de la demande: 23.01.2008
(73) Titulaire: SIDEL, 76930 Octeville-sur-Mer (FR)
(72) Inventeur: PETROVIC, Zmaj, F-76930 Octeville sur Mer (FR)
(74) Mandataire: Cabinet Plasseraud
(86) Numéro de dépôt international: PCT/FR2006/001062
(87) Numéro de publication internationale: WO 2006/120354

(56) Documents cités:
- EP-A- 0 480 863
- US-A- 2 256 005
- US-A- 3 094 206
- US-A- 6 129 202
- US-B1- 6 386 355

## Description

La présente invention concerne un dispositif convoyeur à tapis sans fin modulaire, muni de moyens pour guider ledit tapis dans les portions de trajectoires courbes.

Ce type de tapis, généralement réalisé en matériau thermoplastique, comme décrit dans le document US 5573105, peut comporter des moyens intrinsèques qui permettent d'améliorer son guidage, en particulier au niveau des portions courbes du convoyeur. En fait, il s'agit essentiellement de réduire les frottements entre le tapis et la structure porteuse de ce dernier et, autant que possible, de pallier les conséquences de ce frottement qui peut varier dans des proportions importantes selon l'importance de la charge véhiculée par le brin supérieur dudit tapis.

Les conséquences de ce frottement sont multiples. Il y a tout d'abord l'échauffement entre les parties mobiles, c'est-à-dire le tapis, et les parties fixes constituées par les différents éléments de la structure porteuse dudit tapis ; il y a aussi l'usure du tapis qui est réalisé en matériau thermoplastique, et, autre conséquence importante, l'instabilité dudit tapis. En effet, dans les courbes, sous l'effet de la charge et de la traction, le tapis peut avoir tendance à se soulever au niveau de sa périphérie extérieure.

Il existe des solutions pour réduire le frottement entre le tapis et la structure du convoyeur. Comme décrit dans le document précité, le tapis peut comporter des galets qui sont montés en saillie sur sa surface interne et ces galets sont disposés sur toute la longueur du tapis, fixés par des moyens appropriés, pour coopérer avec un guide courbe situé au niveau de chaque partie courbe dudit convoyeur.

En plus de leur fonction spécifique liée au guidage curviligne du tapis, les galets peuvent aussi assurer la stabilisation du tapis contre les risques de soulèvement du brin supérieur dans les portions en courbe du convoyeur.

Pour cette fonction de stabilisation du tapis, les galets du document précité coopèrent avec un aménagement du guide courbe fixe, lequel aménagement se présente sous la forme d'un rebord continu, disposé en saillie par rapport à la surface active de roulement dudit guide, lequel rebord s'étend entre lesdits galets et la surface interne du tapis.

Dans un autre mode de réalisation, cette fonction de stabilisation du brin supérieur du tapis dans les parties courbes du convoyeur est assurée au moyen d'un guide courbe qui est disposé au niveau de la périphérie externe desdites parties courbes, et ce guide coopère avec des protubérances en forme d'équerre, ou de crochet, qui sont disposées en saillie sur la surface interne du rebord périphérique dudit tapis.

Il existe également, comme décrits dans le document US 3 094 206, d'autres types de tapis convoyeurs, non modulaires, qui comportent des galets coopérant avec un guide dans les parties courbes. Dans ce document, des galets sont également disposés directement sur le bâti courbe, pour réduire le frottement et améliorer le guidage.

Le document US 6,129,202 décrit un convoyeur à tapis sans fin modulaire conforme au préambule de la revendication 1. Dans ce document, le tapis convoyeur ne comporte pas de galets mais des protubérances disposées en saillie sur sa surface interne et ces protubérances coopèrent avec des galets qui sont disposés seulement sur ce qui fait office de bâti dans la partie courbe du convoyeur. Ces galets permettent de réduire les frottements et ils comportent, en plus, une gorge qui coopère avec une sorte d'ergot aménagé à la partie inférieure de chaque protubérance pour stabiliser le tapis et de le maintenir à plat.

La présente invention propose un aménagement qui permet de traiter d'une façon relativement simple ces problèmes de guidage curviligne et de stabilisation des tapis modulaires dans les portions courbes des convoyeurs.

Le dispositif convoyeur selon l'invention comprend une structure, ou bâti, pour porter et guider les brins supérieur et inférieur dudit tapis dans les portions de trajectoires courbes et, en particulier, des moyens de guidage curviligne et de stabilisation du brin supérieur, lesquels moyens sont, d'une part, constitués de galets qui sont solidaires de ladite structure porteuse dudit brin supérieur et, d'autre part, constitués de taquets qui sont disposés sur la surface interne dudit tapis, lesquels taquets sont aménagés pour rouler sur lesdits galets et ils comportent, à leur extrémité, un talon qui coopère avec des moyens appropriés pour stabiliser ledit brin supérieur, lesquels moyens de stabilisation sont constitués d'un rail qui est disposé directement sous lesdits galets pour coopérer avec ledit talon de chaque taquet, de façon à réaliser avec lesdits taquets, à la fois un guidage curviligne du brin supérieur du tapis au moyen des galets et la stabilisation dudit brin supérieur, mais d'une manière continue, au moyen dudit rail.

Cette disposition constructive originale permet d'utiliser des galets en forme de simple roulement du type à billes, peu onéreux.

Toujours selon l'invention, la structure porteuse du brin supérieur du tapis est constituée d'une semelle façonnée sous la forme d'une portion de couronne circulaire à partir d'une plaque en matériau thermoplastique, laquelle semelle comporte une entaille qui est aménagée en courbe dans son épaisseur, à proximité de son rebord externe, laquelle entaille est constituée d'une rainure pour le passage des taquets et d'une feuillure pour loger les galets et le rail de stabilisation dudit brin supérieur du tapis.

Selon une autre disposition de l'invention, le rail de stabilisation du tapis se présente sous la forme d'une lame métallique mince conformée, comme la semelle, en arc de cercle, lequel rail est disposé et fixé dans la feuillure de ladite semelle et son rebord externe, qui sert de guide au talon de chaque taquet, s'avance en saillie dans la rainure où circulent ces derniers.

Selon un premier mode de réalisation de l'invention, le rail de stabilisation comporte des axes sur lesquels sont emmanchés en force les différents galets, ledit rail étant lui-même fixé par vis ou autre dans la feuillure de la semelle porteuse du brin supérieur du tapis.

Selon une variante de réalisation de l'invention, la feuillure de la semelle porteuse du tapis comporte des orifices pour accueillir et verrouiller l'axe de chaque galet, lequel axe comprend, d'une part, un renflement à son extrémité inférieure pour permettre son verrouillage par rapport à ladite semelle au moyen d'un emmanchement en force dans l'épaisseur de cette dernière et, d'autre part, un épaulement situé sous le galet, lequel épaulement verrouille le rail de stabilisation dans le fond de ladite, lequel rail comporte, en vis-à-vis desdits orifices, des trous oblongs dont les dimensions tiennent compte, notamment, des coefficients de dilatation différents qui existent entre ledit rail et ladite semelle.

Toujours selon l'invention, chaque taquet se présente sous la forme d'une excroissance moulée, de façon monobloc, sur la surface interne du tapis, laquelle excroissance comporte, d'une part, un logement pour accueillir une pièce rapportée en forme de patin en matériau adapté pour le contact avec les galets et, d'autre part, au-delà dudit logement, un aménagement en forme d'équerre dont la branche terminale forme une sorte de talon qui coopère avec le rail de stabilisation pour contrer les sollicitations verticales auxquelles ledit tapis est soumis en fonction de la charge qu'il transporte.

L'invention permet ainsi de concentrer en un lieu unique approprié l'ensemble des moyens qui permettent de solutionner les problèmes liés au guidage et à la stabilisation du tapis dans les portions courbes des convoyeurs.

Selon une autre disposition de l'invention, l'entraxe entre deux galets adjacents est compris entre 0,5 et 1,5 fois l'intervalle qui existe entre deux taquets consécutifs du tapis ; cet entraxe est choisi en fonction des contraintes auxquelles est soumis le tapis ; il peut aussi être relativement important du fait de la particularité de certains types de tapis modulaires qui, dans les courbes, forment une structure relativement rigide, raidie par les frottements entre les différents maillons.

Toujours selon l'invention, le patin comporte une paroi de roulage de forme trapézoïdale dont la hauteur correspond au moins à celle des galets et dont la longueur est de l'ordre des ¾ de l'intervalle qui existe entre deux taquets consécutifs du tapis.

Selon une autre disposition de l'invention, le patin comporte, derrière la paroi de roulage, une excroissance en forme de plot qui s'encastre dans un logement approprié aménagé dans le taquet, lequel plot est muni de moyens qui permettent de le verrouiller par rapport audit taquet comme, par exemple, un ergot en forme de cylindre tronqué qui coopère avec un orifice aménagé dans l'une des cloisons dudit taquet.

Toujours selon l'invention, la cloison du taquet qui permet le verrouillage du plot du patin s'étend entre deux flancs dudit taquet, lesquels flancs sont perpendiculaires au tapis et à son sens de déplacement, laquelle cloison se prolonge au-delà de la paroi trapézoïdale dudit patin, sous la forme d'une équerre qui se termine par le talon de stabilisation dudit tapis.

L'invention concerne également, à titre de produit industriel, la structure porteuse du brin supérieur tapis équipée des galets et du rail de stabilisation selon la revendication 10.

Mais l'invention sera encore détaillée à l'aide de la description suivante et des dessins annexés, donnés à titre indicatif et dans lesquels :
- la figure 1 représente, schématiquement, un convoyeur courbe avec un tapis sans fin du type modulaire dont une partie est écorchée pour montrer le système de guidage ;
- la figure 2 est une coupe schématique selon 2-2 de la figure 1 ;
- la figure 3 montre, de façon plus détaillée, une portion du tapis modulaire et le rail qui est muni des galets ;
- la figure 4 est une coupe selon 4-4 de la figure 3 montrant, schématiquement et de façon plus détaillée, la disposition des moyens de guidage et de stabilisation du tapis selon un premier mode de réalisation de l'invention ;
- la figure 5 représente, en perspective et plus particulièrement vu de dessous, un patin;
- la figure 6 représente, vus de face, c'est-à-dire vus du côté des galets, le tapis avec un taquet et le patin installé sur ledit taquet ;
- la figure 7 est une coupe selon 7-7 de la figure 6 qui montre le taquet sous la surface interne du tapis et le patin intégré dans ledit taquet ;
- la figure 8 est une vue correspondant à la figure 7 mais sans le patin ;
- la figure 9 est une vue de dos du taquet seul ;
- la figure 10 est une vue de face du taquet seul ;
- la figure 11 montre un mode de réalisation de la semelle porteuse du brin supérieur du tapis, laquelle semelle est représentée seule, c'est-à-dire sans les moyens de guidage et de stabilisation du tapis ;
- la figure 12 est une section selon 12-12 de la semelle porteuse qui est représentée figure 11 ;
- la figure 13 représente, de façon détaillée et en coupe, un autre mode de réalisation des moyens de guidage du tapis, en liaison avec la semelle représentée figures 11 et 12.

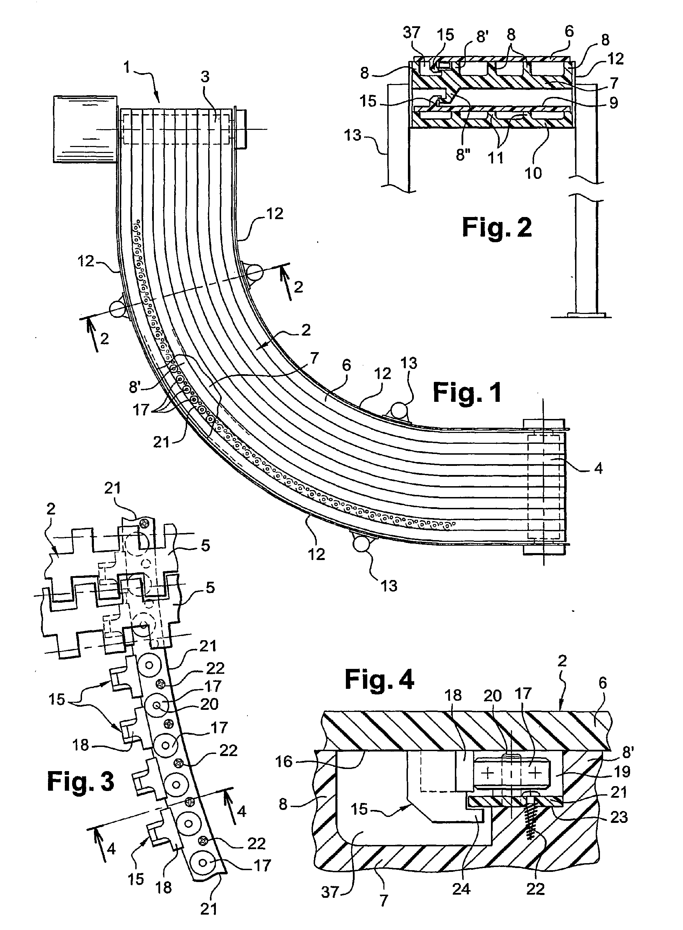

Le convoyeur (1) représenté figure 1, en plan, comprend un tapis (2) sans fin qui est tendu entre des tambours (3) et (4), dont l'un est motorisé. Ce tapis sans fin est du type modulaire ; il est constitué, comme visibles sur la figure 3, d'éléments (5) en matériau thermoplastique assemblés entre eux, lesquels éléments sont susceptibles de se déplacer angulairement l'un par rapport à l'autre pour courber ledit tapis (2).

Tel que représenté, ce convoyeur comporte un tapis (2) qui parcourt des portions rectilignes et, entre les deux, une portion courbe. Ce type de tapis peut aussi être utilisé pour des convoyeurs de grande longueur, avec plusieurs portions de trajectoires courbes orientées dans un même sens.

Le guidage du tapis dans les portions de trajectoires rectilignes ne pose pas de problème particulier. Dans les portions courbes, il est nécessaire de guider le tapis pour obtenir un rayon de courbure régulier et de le stabiliser pour éviter tout risque de soulèvement sous l'effet des efforts verticaux qui peuvent naître lorsqu'il est chargé.

Le brin (6) supérieur du tapis (2), figure 2, repose sur une structure porteuse en forme de semelle (7) qui fait partie de la structure générale, ou bâti, du convoyeur. Cette semelle (7) est façonnée dans un matériau thermoplastique ; elle est aménagée en courbe et peut comporter des guides (8) qui sont courbes également et servent de supports à la surface interne (surface inférieure) du brin (6) supérieur du tapis.

Le brin (9) inférieur, ou brin retour, du tapis (2) est porté et guidé lui aussi par une semelle (10) inférieure, du même type que la semelle (7), laquelle est munie, de la même façon, de guides (11) servant de supports.

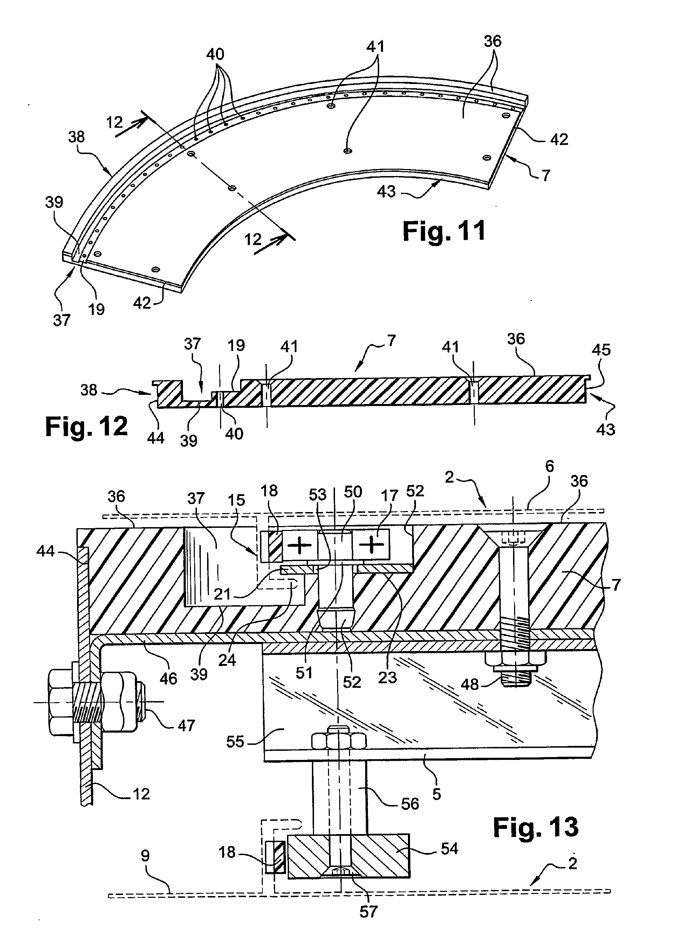

Le rayon de courbure de la semelle (7) est adapté à la capacité de déformation du tapis et cette semelle (7) comporte des moyens de guidage appropriés qui apparaissent sur les figures 1 à 4 pour un premier mode de réalisation et figures 11 à 13 pour un second mode de réalisation.

Les deux semelles (7) et (10) sont assemblées entre elles par des flancs (12) et l'ensemble forme la structure, ou bâti, du convoyeur ; ces flancs (12) sont, par exemple, constitués de tôles métalliques sur lesquelles se fixent également les poteaux (13) qui servent au soutènement dudit bâti.

Le guidage curviligne du tapis (2) est réalisé au moyen de taquets (15) qui sont disposés sur la face (16) interne dudit tapis, visibles aussi figure 4, et, pour le brin (6) supérieur, au moyen d'un guide (8') courbe aménagé sur la semelle (7), lequel guide (8') fait également office de guide support au même titre que les autres guides (8). Ce guide (8') support se situe à proximité de la périphérie de la semelle (7) ; ce guide (8') correspond, par exemple, au deuxième guide support en partant de l'extérieur du convoyeur ; ainsi les taquets (15) circulent dans l'espace qui s'étend entre les deux guides (8 et 8') qui sont situés sur la périphérie externe dudit convoyeur.

Un autre guide (8 ") est aménagé sous la semelle (7) pour réaliser le guidage du brin (9) inférieur du tapis ; ce second guide (8") coopère avec les taquets (15) dudit brin retour du tapis (2) qui circule sur la semelle (10) inférieure.

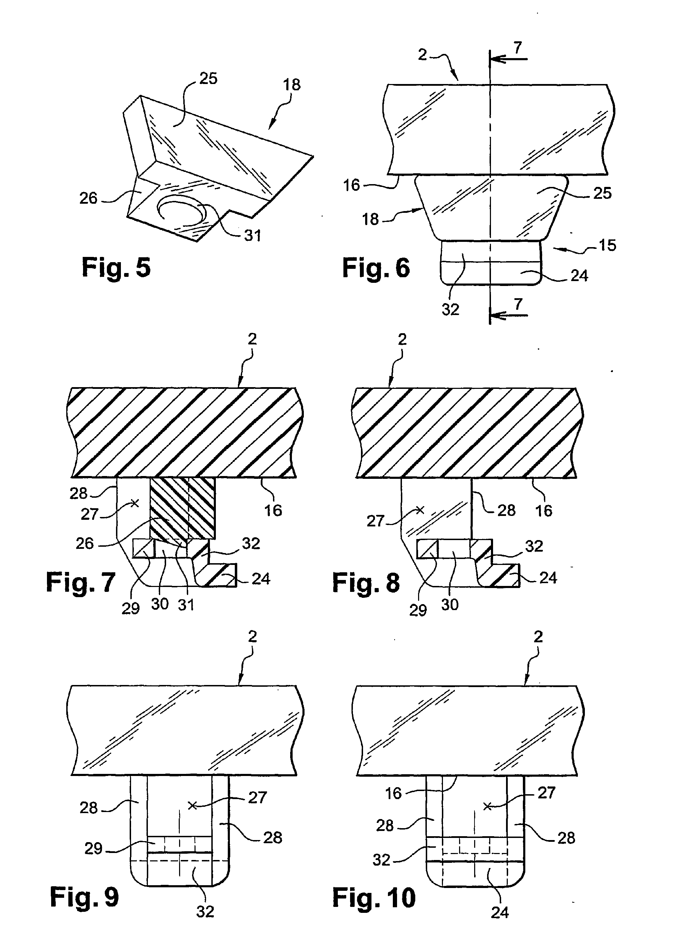

Pour obtenir un guidage curviligne sans frottement pour le brin (6) supérieur du tapis, les taquets (15) circulent en fait sur un organe de guidage particulier qui comprend notamment des galets (17). Ces galets (17), visibles figure 4, sont de préférence de simples roulements à billes, et ils sont en contact avec des patins (18) qui sont portés par les taquets (15). Ces patins (18) sont solidaires des taquets (15) comme détaillés plus loin en liaison avec les figures 5 à 10 ; ils sont réalisés en matériau thermoplastique, comme le tapis (2) et ses taquets (15), mais un matériau thermoplastique différent, plus élastique, pour mieux résister à la pression lors du contact avec les galets (17).

Les galets (17) sont disposés dans une feuillure (19) qui est aménagée dans la partie supérieure externe du guide (8'), figure 4 ; ils sont montés chacun sur un axe (20) qui est vertical, perpendiculaire à la surface (16) interne du tapis (2), et ces axes, dans ce premier mode de réalisation, sont solidaires d'un rail (21) qui est fixé par des vis (22), par exemple, sur le fond (23) de la feuillure (19).

L'organe de guidage curviligne constitué du rail (21), des galets (17) et des axes (20), forme une pièce à part facilement adaptable sur ce type de convoyeur. Le montage en feuillure permet de positionner les galets (17) et le rail (21) avec une grande précision et d'obtenir ainsi un guidage régulier du tapis.

Le rail (21) est, par exemple, constitué d'une lame métallique mince façonnée en arc de cercle ; la largeur de cette lame mince est sensiblement supérieure au diamètre des galets (17). Les axes (20) des galets sont soudés sur cette lame, perpendiculairement. Les galets (17) sont simplement enfilés sur les axes (20), légèrement serrés, de façon à pouvoir être facilement changés en cas de détérioration, par exemple.

La largeur de la lame constituant le rail (21) est supérieure à celle du fond (23) de la feuillure (19) ce qui permet d'utiliser la partie en saillie de ce rail (21) pour réaliser la stabilisation verticale du tapis c'est-à-dire son maintien à plat quelle que soit la charge portée par le brin (6) supérieur dudit tapis.

Cette stabilisation est obtenue par un aménagement de l'extrémité du taquet (15), laquelle extrémité est en forme d'équerre et sa branche horizontale d'extrémité constitue une sorte de talon (24). Ce talon (24) coopère avec le dessous du rail (21) et en particulier avec sa partie en saillie qui s'étend à l'extérieur de l'épaulement (23) du guide (8').

Tous les moyens de guidage et de stabilisation du tapis sont concentrés sur le rail (21) qui porte les galets (17), en coopération avec le taquet (15) qui porte le patin (18) et le talon (24). Les opérations de maintenance de cet ensemble s'en trouvent grandement facilitées du fait aussi du montage particulier des patins (18) sur les taquets (15).

Les taquets (15) coopèrent de la même façon avec le guide (8"), comme représenté figure 2 ; ce guide (8") permet de réaliser le guidage du brin (9) inférieur du tapis.

Un patin (18) est représenté figure 5, en perspective. Ce patin est constitué d'une paroi (25) de forme trapézoïdale ; cette paroi (25) roule sur les différents galets (17) ; sa forme trapézoïdale permet d'attaquer et de quitter lesdits galets (17) en douceur.

Le dos de la paroi (25) comporte, de façon monobloc, un plot (26) qui coopère avec un logement (27) aménagé dans le taquet (15). Ce logement (27) est délimité par la surface (16) interne du tapis (2), par des flancs (28) qui sont parallèles entre eux et qui s'étendent perpendiculairement à ladite surface (16) et au sens d'avancement du tapis (2), et par une cloison (29) qui relie lesdits flancs et qui est parallèle à ladite surface interne (16). Cette cloison (29) comporte un orifice (30) qui accueille un ergot (31) aménagé sur le plot (26), sous la surface qui prolonge le petit côté de la paroi (25) trapézoïdale du patin (18).

L'ergot (31) permet de verrouiller le patin (18) dans le logement (27) du taquet (15) avec une possibilité de démontage pour changer ledit patin en cas d'usure ou de détérioration. Cet ergot (31) se présente sous la forme d'une portion de cylindre tronqué, comme montré figures 5 et 7.

La paroi (25) trapézoïdale du patin (18) est en appui sur la façade des flancs (28) du taquet (15) ; son grand côté est situé sous la face interne (16) du tapis (2).

Sous cette paroi (25), figures 6 et 7, et en particulier sous son petit côté, on trouve le prolongement en équerre qui conduit au talon (24). Ce talon (24), aménagé à l'extrémité du taquet (15), s'étend en saillie au-delà du patin (18) ; il est décalé par rapport à la cloison (29) et il est relié à cette dernière par une branche (32) qui s'étend sous ledit petit côté de la paroi (25) de façon à contribuer au calage de cette dernière.

La branche (32) est disposée à l'équerre par rapport à la cloison (29) et elle est légèrement en retrait par rapport à la surface de roulage de la paroi (25) du patin (18) afin d'éviter le contact avec le rail (21) dont le rebord périphérique se situe sensiblement à l'aplomb de la zone de roulage des patins (18) sur les galets (17).

Le rail (21) constitue une sorte d'accessoire ou de pièce détachée. Il peut aussi être réalisé sous la forme d'une seule pièce pour un convoyeur quart de courbe ou être divisé en plusieurs tronçons qui sont assemblés, selon les besoins, dans la feuillure (19) spécialement aménagée pour les accueillir.

La figure 11 montre un mode original de réalisation de la semelle (7) qui fait office de structure porteuse pour le brin (6) supérieur du tapis (2).

Cette semelle (7) se présente sous la forme d'une portion (un quart) de couronne circulaire ; elle est façonnée, par simple usinage, à partir d'une plaque en matériau thermoplastique de faible épaisseur ; sa surface (36) supérieure fait office de surface de glissement pour le brin (6) supérieur du tapis (2). Elle comporte une entaille (37) en arc de cercle qui est réalisée dans son épaisseur et dans la surface (36).

Cette entaille (37), repérée également à titre indicatif figures 2 et 4, est située près du flanc (38) externe de la semelle (7), à une distance de ce dernier qui correspond, par exemple, à l'épaisseur de la plaque constituant ladite semelle (7). Elle forme à la fois une sorte de rainure (39) et de feuillure (19) ; ladite rainure (39) étant disposée entre la surface (36) supérieure périphérique externe et ladite feuillure (19).

La rainure (39) permet, notamment, comme détaillé plus loin, le passage des taquets (15) du tapis (2), et la feuillure (19) permet, comme pour le mode de réalisation détaillé précédemment, l'installation des moyens de guidage et de stabilisation du brin (6) supérieur dudit tapis (2).

La feuillure (19) comporte des orifices (40), régulièrement répartis, pour l'accueil des axes des galets (17).

La semelle (7) comporte, comme détaillés plus loin en liaison avec la figure 13, des orifices (41) qui permettent de réaliser sa fixation sur les éléments constitutifs du bâti du convoyeur. Ces orifices (41) sont disposés par paires, radialement.

Sur chacune de ses extrémités, la semelle (7) comporte des chanfreins (42) pour faciliter le glissement du tapis (2) au niveau des raccordements des différents éléments constitutifs du convoyeur.

La figure 12 montre, d'une façon plus détaillée, la semelle (7), en coupe radiale. On retrouve l'entaille (37) constituée, d'une part, de la rainure (39) et, d'autre part, de la feuillure (19), laquelle feuillure (19) comporte les orifices (40) pour l'accueil des axes des galets (17). Ces orifices (40) sont perpendiculaires à la surface (36) de glissement de la semelle (7). On retrouve aussi les orifices (41) pour réaliser la fixation de la semelle (7) sur le bâti du convoyeur.

Les flancs (38) externe et (43) interne de la semelle (7) comportent chacun une feuillure (44) et (45) respectivement ; ces feuillures coopèrent avec les flancs (12) qui font partie du bâti du convoyeur. La profondeur des feuillures (44) et (45) correspond à l'épaisseur de ces flancs (12).

La figure 13 montre, en coupe, un mode de réalisation du convoyeur comportant la semelle (7). Ce convoyeur est constitué d'un bâti qui comprend les flancs (12), lesquels flancs sont reliés entre eux par des traverses (46) et ils sont fixés à ces dernières au moyen de boulons (47).

Les traverses (46) servent également de support pour la structure porteuse constituée de la semelle (7). Cette semelle (7) est fixée aux différentes traverses au moyen de boulons (48) disposés dans les différents orifices (41) de la dite semelle (7).

Le tapis (2) est représenté de façon symbolique sur la figure 13. Son brin (6) supérieur glisse sur la surface (36) supérieure de la semelle (7), laquelle surface (36) supérieure s'étend de part et d'autre de l'entaille (37) qui est réalisée dans l'épaisseur de ladite semelle (7) comme montré figures 11 et 12.

La rainure (39) de cette entaille (37) sert de zone de passage pour les taquets (15) qui s'étendent en saillie sous la surface inférieure du brin (6) supérieur. La profondeur de la rainure (39) est supérieure à la hauteur des taquets (15) et sa largeur est nettement supérieure à la dimension radiale desdits taquets pour permettre le montage et le démontage du brin (6) supérieur du tapis, compte tenu de la présence des moyens de guidage dudit brin (6) supérieur.

Les moyens de guidage et de stabilisation verticale de ce brin (6) supérieur sont logés dans la feuillure (19) de l'entaille (37). Cette feuillure (19) s'étend sur le coté interne de la rainure (39) sous le niveau de la surface (36) de guidage du brin (6) supérieur ; la profondeur de ladite feuillure est de l'ordre de la moitié de celle de la rainure (39), et sa largeur est du même ordre.

Les moyens de guidage sont constitués de galets (17) en forme de simples roulements du type à billes. Ces galets (17) sont montés sur des axes (50) qui sont enfilés dans les différents orifices (40) de la semelle (7). Ces axes (50) comportent un épaulement (51) qui assure le positionnement vertical des galets (17), chaque galet étant monté serré sur son axe (50).

L'axe (50) se prolonge sous l'épaulement (51) et il comporte, à son extrémité inférieure, un renflement (52) qui permet de réaliser son verrouillage dans son orifice (40), par coincement, au terme d'un emmanchement en force dans la semelle (7). Ce renflement (52) consiste en une surépaisseur qui s'étend en forme de cône sur une longueur de l'ordre du rayon de l'axe (50).

Les moyens de stabilisation verticale du brin (6) supérieur, constitué du rail (21), sont interposés entre le fond (23) de la feuillure (19) et l'épaulement (51) de l'axe (50). Le rail (21) est constitué, comme dans l'exemple représenté figure 4, d'une lame métallique cintrée qui comporte des trous (53) disposés en vis-à-vis des orifices (40). Ces trous (53) ont une forme oblongue dont les dimensions tiennent compte du diamètre de l'axe (50) et de la différence qui existe entre le coefficient de dilatation dudit rail et celui de la semelle (7). Chaque trou (53) fait 8,2 mm radialement et 9,2 mm dans le sens de la longueur alors que le diamètre du renflement est de 8 mm et celui de l'axe (50) au niveau du rail (21) est de 7,3 mm ; l'épaulement (51) fait un diamètre de l'ordre de 10 mm pour couvrir le trou (53).

Les patins (18) roulent sur les différents galets (17), et les talons (24) associés à ces différents taquets (15) coopèrent avec le rail (21) pour retenir le brin (6) supérieur et éviter son basculement en cas de charge excessive du tapis (2).

La semelle (7) forme, avec les moyens de guidage et de stabilisation verticale du tapis, une sorte de sous-ensemble qui est facilement intégrable dans un bâti ou une structure de convoyeur.

Le brin (9) inférieur du tapis (2) est également guidé au moyen d'un rail (54) qui constitue une structure équivalente aux moyens de guidage et de stabilisation du brin (6) supérieur.

Ce rail (54) a une épaisseur qui correspond à celle du galet (17), augmentée de celle de l'épaulement (51) et du rail (21). Il est porté par un profilé (55) qui est fixé sur les traverses (46) au moyen des boulons (48).

Le profilé (55) est en forme de « U » à ailes de longueurs inégales disposées horizontalement et son aile inférieure porte le rail (54) par l'intermédiaire d'une entretoise (56) et d'un boulon (57).

Le brin (9) inférieur du tapis repose également sur une semelle de guidage non représentée, portée par les flancs (12) du bâti du convoyeur.

## Revendications

1. Convoyeur à tapis sans fin modulaire comprenant une structure, ou bâti, pour porter et guider les brins supérieur et inférieur dudit tapis dans les portions de trajectoires courbes et, en particulier, des moyens de guidage curviligne et de stabilisation du brin supérieur, lesquels moyens de guidage curviligne sont constitués de galets (17), régulièrement répartis sur ladite structure porteuse, coopérant avec des taquets (15) qui sont disposés sur la surface interne (16) dudit tapis, lesquels taquets (15) comportent un talon (24) qui coopère avec des moyens appropriés pour stabiliser ledit brin supérieur du tapis, **caractérisé en ce que** lesdits moyens de stabilisation sont constitués d'un rail (21) courbe qui est disposé directement sous lesdits galets (17) pour coopérer avec ledit talon (24) de chaque taquet (15).

2. Convoyeur à tapis sans fin modulaire selon la revendication 1, **caractérisé en ce qu'**il comprend une structure pour porter le brin (6) supérieur du tapis qui est constituée d'une semelle (7) façonnée, en forme de portion de couronne circulaire, dans une plaque en matériau thermoplastique, laquelle semelle (7) comporte une entaille qui est aménagée en courbe dans son épaisseur, à proximité de son rebord externe, laquelle entaille est constituée d'une rainure (39) pour le passage des taquets (15) et d'une feuillure (19) pour loger les moyens de guidage et de stabilisation dudit brin (6) supérieur du tapis.

3. Convoyeur à tapis sans fin modulaire selon la revendication 2, **caractérisé en ce que** le rail (21) disposé sous les galets (17) se présente sous la forme d'une lame métallique mince qui est conformée, comme la semelle (7), en arc de cercle, lequel rail (21) est logé et fixé dans la feuillure (19) de la semelle (7) et son rebord externe s'étend en saillie dans la rainure (39) où circulent les taquets (15).

4. Convoyeur à tapis sans fin modulaire selon l'une quelconque des revendications 1 à 3, **caractérisé en ce que** chaque taquet (15) se présente sous la forme d'une excroissance moulée, de façon monobloc, sur la surface (16) interne du tapis (2), laquelle excroissance comporte, d'une part, un logement (27) pour accueillir une pièce rapportée en forme de patin (18) aménagé pour rouler sur les galets (17), et, d'autre part, au-delà dudit logement (27), un aménagement en forme d'équerre dont la branche terminale forme une sorte de talon (24) qui coopère avec le rail de stabilisation.

5. Convoyeur à tapis sans fin modulaire selon l'une quelconque des revendications 1 à 4, **caractérisé en ce que** l'entraxe entre deux galets (17) adjacents est compris entre 0,5 et 1,5 fois l'intervalle existant entre deux taquets (15) consécutifs du tapis (2).

6. Convoyeur à tapis sans fin modulaire selon l'une quelconque des revendications 4 ou 5, **caractérisé en ce que** le patin (18) comporte une paroi (25) de roulage de forme trapézoïdale dont la hauteur correspond au moins à celle des galets (17) et dont la longueur est de l'ordre des ¾ de l'intervalle existant entre deux taquets (15) du tapis (2).

7. Convoyeur à tapis sans fin modulaire selon l'une quelconque des revendications 4 à 6, **caractérisé en ce que** le patin (18) comprend, derrière la paroi (25) de roulage, une excroissance monobloc en forme de plot (26), lequel plot (26) s'encastre dans un logement (27) approprié qui est aménagé dans le taquet (15) et il est muni de moyens permettant son verrouillage par rapport audit taquet (15).

8. Convoyeur à tapis sans fin modulaire selon la revendication 7, **caractérisé en ce que** les moyens de verrouillage du plot (26) du patin (18), sur le taquet (15), sont constitués d'un ergot (31) comme, par exemple, un ergot en forme de cylindre tronqué qui coopère avec un orifice (30) aménagé dans une cloison (29) dudit taquet (15).

9. Convoyeur à tapis sans fin modulaire selon la revendication 8, **caractérisé en ce que** la cloison (29) du taquet (15) qui permet le verrouillage du plot (26) du patin (18) s'étend, d'une part, entre deux flancs (28) dudit corps, lesquels flancs sont perpendiculaires à la surface interne (16) du tapis (2) et à son sens de déplacement, et elle se prolonge, d'autre part, au-delà de la paroi (25) trapézoïdale dudit patin, sous la forme d'une équerre qui se termine par le talon (24).

10. Structure porteuse courbe pour convoyeur selon l'une quelconque des revendications 1 à 9, **caractérisée en ce qu'**elle est constituée d'une plaque en matériau thermoplastique usinée, comportant - une entaille (37) courbe dans son épaisseur, laquelle entaille (37) comprend une rainure (39) pour le passage des taquets (15) et une feuillure accueillant les galets (17) de guidage du brin (6) supérieur du tapis et, - disposé sous lesdits galets, le rail (21) de stabilisation dudit brin (6) supérieur du tapis.

11. Structure porteuse courbe selon la revendication 10, **caractérisée en ce qu'**elle comporte, dans la feuillure de logement des galets (17) et du rail de stabilisation (21), des orifices (40) aménagés accueillant les axes (50) desdits galets (17), chaque axe (50) comportant un épaulement (51) qui s'interpose entre son galet (17) et le rail (21) de stabilisation, ledit axe (50) étant par ailleurs muni, à son extrémité inférieure, d'un renflement (52) qui permet son verrouillage par emmanchement en force dans ledit orifice (40) et le verrouillage dudit rail (21).

12. Structure porteuse courbe selon la revendication 11, **caractérisée en ce que** ledit rail (21) de stabilisation est muni de trous (53) de forme oblongue, disposés en vis-à-vis des orifices (40) aménagés dans la semelle (7) sur laquelle il est verrouillé, lesquels trous (53) ont des dimensions qui tiennent compte de la différence qui existe entre le coefficient de dilatation dudit rail et celui de ladite semelle (7).

## Claims

1. A modular endless belt conveyor comprising a structure, or frame, for supporting and guiding the upper and lower strands of said belt in the curved path portions and, in particular, curvilinear guide means and stabilizing means for the upper strand, which curvilinear guide means are made up of rollers (17), uniformly distributed over said supporting structure, cooperating with cleats (15) which are arranged on the inner surface (16) of said belt, which cleats (15) have a claw (24) which cooperates with means suitable for stabilizing said upper strand of the belt, **characterized in that** said stabilizing means are made up of a curved rail (21) which is arranged directly below said rollers (17) so as to cooperate with said claw (24) of each cleat (15).

2. The modular endless belt conveyor as claimed in claim 1, **characterized in that** it comprises a structure for supporting the upper strand (6) of the belt, this structure being made up of a baseplate (7) produced, in the form of a circular ring portion, from a sheet of thermoplastic, which baseplate (7) has an indentation which is arranged as a curve in its thickness, in the vicinity of its outer rim, which indentation is made up of a groove (39) for the passage of the cleats (15) and of a rebate (19) for housing the means for guiding and stabilizing said upper strand (6) of the belt.

3. The modular endless belt conveyor as claimed in claim 2, **characterized in that** the rail (21) arranged below the rollers (17) takes the form of a thin metal strip which, like the baseplate (7), is configured as an arc of a circle, which rail (21) is arranged and fastened in the rebate (19) of the baseplate (7), and its outer rim projects into the groove (39) in which the cleats (15) travel.

4. The modular endless belt conveyor as claimed in any one of claims 1 to 3, **characterized in that** each cleat (15) takes the form of a protrusion molded, in an integral manner, on the inner surface (16) of the belt (2), which protrusion comprises, on the one hand, a housing (27) for accommodating an add-on part in the form of a runner (18) arranged to run on the rollers (17), and, on the other hand, beyond said housing (27), an arrangement in the form of an angle bracket whose terminal branch forms a kind of claw (24) which cooperates with the stabilizing rail.

5. The modular endless belt conveyor as claimed in any one of claims 1 to 4, **characterized in that** the center-to-center distance between two adjacent rollers (17) is between 0.5 and 1.5 times the spacing which is present between two consecutive cleats (15) of the belt (2).

6. The modular endless belt conveyor as claimed in either one of claims 4 and 5, **characterized in that** the runner (18) has a running wall (25) of trapezoidal shape whose height corresponds at least to the height of the rollers (17) and whose length is around % of the spacing which is present between two cleats (15) of the belt (2).

7. The modular endless belt conveyor as claimed in any one of claims 4 to 6, **characterized in that** the runner (18) comprises, behind the running wall (25), an integral protrusion in the form of a stub (26), which stub (26) fits into a suitable housing (27) which is formed in the cleat (15), and it is provided with means enabling it to be locked with respect to said cleat (15).

8. The modular endless belt conveyor as claimed in claim 7, **characterized in that** the means for locking the stub (26) of the runner (18) to the cleat (15) are made up of a lug (31) such as, for example, a lug in the form of a truncated cylinder which cooperates with an orifice (30) formed in a partition (29) of said cleat (15).

9. The modular endless belt conveyor as claimed in claim 8, **characterized in that** the partition (29) of the cleat (15) which allows the stub (26) of the runner (18) to be locked extends, on the one hand, between two flanks (28) of said body, which flanks are perpendicular to the inner surface (16) of the belt (2) and to its direction of movement, and it is prolonged, on the other hand, beyond the trapezoidal wall (25) of said runner, in the form of an angle bracket which is terminated by the claw (24).

10. A curved supporting structure for a conveyor as claimed in any one of claims 1 to 9, **characterized in that** it is made up of a machined sheet of thermoplastic having a curved indentation (37) in its thickness, which indentation (37) comprises a groove (39) for the passage of the cleats (15) and a rebate accommodating the rollers (17) for guiding the upper strand (6) of the belt and, arranged below said rollers, the rail (21) for stabilizing said upper strand (6) of the belt.

11. The curved supporting structure as claimed in claim 10, **characterized in that** it has, in the rebate for housing the rollers (17) and the stabilizing rail (21), arranged orifices (40) accommodating the pins (50) of said rollers (17), each pin (50) having a shoulder (51) which is interposed between its roller (17) and the stabilizing rail (21), said pin (50) being additionally provided, at its lower end, with a bulge (52) which allows it to be locked by force-fitting in said orifice (40) and which allows the locking of said rail (21).

12. The curved supporting structure as claimed claim 11, **characterized in that** said stabilizing rail (21) is provided with holes (53) of oblong shape which are arranged opposite the orifices (40) formed in the baseplate (7) on which it is locked, which holes (53) have dimensions which allow for the difference which exists between the coefficient of expansion of said rail and that of said baseplate (7).

## Patentansprüche

1. Modulares Endlosförderband umfassend eine Struktur, oder Gestell, um das Ober- und Untertrum des Bandes in die gebogenen Bahnabschnitte zu tragen und zu führen, und im besonderen krummlinige Führungs- und Stabilisationsmittel des Obertrums, wobei die krummlinigen Führungsmittel aus regelmäßig auf der Tragstruktur verteilten Laufrollen (17) aufgebaut sind, die mit auf der Innenfläche (16) des Bandes angeordneten Keilen (15) in Wechselwirkung stehen, wobei die Keile (15) einen mit zum Stabilisieren des Obertrums des Bandes geeigneten Mitteln wechselwirkenden Vorsprung (24) aufweisen,
**dadurch gekennzeichnet, dass**
die Stabilisationsmittel aus einer gebogenen Schiene (21) aufgebaut sind, die direkt unterhalb der Laufrollen (17) angeordnet ist, um mit dem Vorsprung (24) jedes Keils (15) wechselzuwirken.

2. Modulares Endlosförderband gemäß Anspruch 1, **dadurch gekennzeichnet, dass** es eine Struktur zum Tragen des Obertrums (6) des Bandes umfasst, die aus einer Sohle (7) aufgebaut ist, die in Gestalt eines kreisförmigen Kranzabschnitts in einer Platte aus thermoplastischem Material ausgebildet ist, wobei die Sohle (7) eine gebogene, in ihrer Dicke eingerichtete Einkerbung nahe ihrer Außenkante aufweist, wobei die Einkerbung aus einer Nut (39) zum Durchlauf der Keile (15) und aus einer Stufe (19) zum Aufnehmen der Führungs- und Stabilisationsmittel des Obertrums (6) des Bandes aufgebaut ist.

3. Modulares Endlosförderband gemäß Anspruch 2, **dadurch gekennzeichnet, dass** sich die unten den Laufrollen (17) angeordnete Schiene (21) in der Gestalt einer dünnen Metallkufe zeigt, die wie die Sohle (7) ähnlich wie ein Kreisbogen ausgebildet ist, wobei die Schiene (21) in der Stufe (19) der Sohle (7) aufgenommen und fixiert ist, und sich ihre Außenkante in der Nut (39), wo die Keile (15) umlaufen, hervorstehend erstreckt.

4. Modulares Endlosförderband gemäß einem der Ansprüche 1 bis 3, **dadurch gekennzeichnet, dass** sich jeder Keil (15) in der Gestalt eines ausgeformten, einstückigen Auswuchses auf der Innenfläche (16) des Bandes (2) zeigt, wobei der Auswuchs einerseits eine Aufnahme (27) zum Empfangen eines Stücks aufweist, das in die Gestalt eines zum Rollen auf den Laufrollen (17) eingerichteten Gleitschuhs (18) gebracht ist, und andererseits jenseits der Aufnahme (27) eine Einrichtung in der Gestalt eines Winkels aufweist, von dem der Endzweig eine Art Absatz (24) ausbildet, der mit der Stabilisationsschiene zusammenwirkt.

5. Modulares Endlosförderband gemäß einem der Ansprüche 1 bis 4, **dadurch gekennzeichnet, dass** der Abstand zwischen die Achse zwei benachbarten Laufrollen (17) zwischen 0,5 und 1,5 mal dem zwischen zwei nachfolgenden Keilen (15) des Bandes (2) existierenden Intervall beträgt.

6. Modulares Endlosförderband gemäß einem der Ansprüche 4 oder 5, **dadurch gekennzeichnet, dass** der Gleitschuh (18) eine trapezförmige Rollwand (25) aufweist, deren Höhe zumindest derjenigen der Laufrollen (17) entspricht, und deren Länge der Ordnung von % des zwischen zwei Keilen (15) des Bandes (2) existierenden Intervalls beträgt.

7. Modulares Endlosförderband gemäß einem der Ansprüche 4 bis 6, **dadurch gekennzeichnet, dass** der Gleitschuh (18) hinter der Rollwand (25) einen einstückigen Auswuchs in der Gestalt eines Kontakts (26) aufweist, wobei sich der Kontakt (26) in eine im Keil (15) angeordnete geeignete Aufnahme (27) einbettet, und mit seine Sperrung im Verhältnis zum Keil (15) ermöglichenden Mitteln versehen ist.

8. Modulares Endlosförderband gemäß Anspruch 7, **dadurch gekennzeichnet, dass** die Sperrmittel des Kontakts (26) des Gleitschuhs (18) auf dem Keil (15) aus einem Zapfen (31) aufgebaut sind, wie zum Beispiel einem Zapfen in der Gestalt eines stumpfen Zylinders, der mit einer in einer Wand (29) des Keils (15) eingerichteten Öffnung (30) zusammenwirkt.

9. Modulares Endlosförderband gemäß Anspruch 8, **dadurch gekennzeichnet, dass** sich die Wand (29) des Keils (15), die das Sperren des Kontakts (26) des Gleitschuhs (18) gestattet, einerseits zwischen zwei Flanken (28) des Körpers erstreckt, wobei diese Flanken senkrecht zur Innenfläche (16) des Bandes (2) und zu seiner Bewegungsrichtung sind, und sich andererseits jenseits der trapezförmigen Wand (25) des Gleitschuhs in der Gestalt eines Winkels hinzieht, der am Vorsprung (24) endet.

10. Gebogene Tragstruktur für einen Förderer gemäß einem der Ansprüche 1 bis 9, **dadurch gekennzeichnet, dass** sie aus einer Platte aus spanend bearbeiteten Thermoplastikmaterial aufgebaut ist, die eine gebogene Einkerbung (37) in ihrer Dicke aufweist, wobei die Einkerbung (37) eine Nut (39) zum Durchlaufen der Keile (15) und eine die Führungslaufrollen (17) des Obertrums (6) des Bandes und die unter den Laufrollen angeordnete Stabilisationsschiene (21) des Obertrums (6) des Bandes empfangende Stufe umfasst.

11. Gebogene Tragstruktur gemäß Anspruch 10, **dadurch gekennzeichnet, dass** sie in der Aufnahmestufe der Laufrollen (17) und der Stabilisationsschiene (21) angeordnete Öffnungen (40) aufweist, welche die Stifte (50) der Laufrollen (17) empfangen, wobei jeder Stift (50) einen Absatz (51) aufweist, der sich zwischen seiner Laufrolle (17) und der Stabilisationsschiene (21) einfügt, wobei der Stift (50) außerdem an seinem unteren Ende mit einer Verdickung (52) versehen sind, die seine Verriegelung durch gezwungenes Eindrücken in die Öffnung (40) und die Verriegelung der Schiene (21) gestattet.

12. Gebogene Tragstruktur gemäß Anspruch 11, **dadurch gekennzeichnet, dass** die Stabilisationsschiene (21) mit länglichen Löchern (53) versehen ist, die gegenüber den in der Sohle (7), auf der sie verriegelt ist, eingerichteten Öffnungen angeordnet sind, wobei die Löcher (53) Dimensionen aufweisen, die der zwischen dem Ausdehnungskoeffizienten der Schiene und demjenigen der Sohle (7) existierten Differenz Rechnung tragen.
